# EUROPEAN PATENT APPLICATION

(11) **EP 4 586 589 A1**
(43) Date of publication of application: **16.07.2025**
(21) Application number: 23875206.7
(22) Date of filing: 04.10.2023
(51) Int. Cl.: H04L 67/145, H04L 67/12, H04L 67/51, H04W 4/70, H04W 8/00, G16Y 30/00, H04L 61/4541, H04W 76/18, H04W 76/19

(54) **ELECTRONIC DEVICE, AND EXTERNAL ELECTRONIC DEVICE CLOUD CONNECTION CONTROL METHOD IN ELECTRONIC DEVICE**

(30) Priority: 05.10.2022 KR 20220127404; 25.10.2022 KR 20220138633
(71) Applicant: Samsung Electronics Co., Ltd., Suwon-si, Gyeonggi-do 16677 (KR)
(72) Inventor: KIM, Namjin, Suwon-si, Gyeonggi-do 16677 (KR); KIM, Hyeonjin, Suwon-si, Gyeonggi-do 16677 (KR); JUNG, Hansoo, Suwon-si, Gyeonggi-do 16677 (KR); KIM, Sijae, Suwon-si, Gyeonggi-do 16677 (KR); PARK, Sungmi, Suwon-si, Gyeonggi-do 16677 (KR); JO, Minkyung, Suwon-si, Gyeonggi-do 16677 (KR)
(74) Representative: Gulde & Partner
(86) International application number: PCT/KR2023/015240
(87) International publication number: WO 2024/076142

(57) **Abstract**

An electronic device (101 in figure 1, 310 in figure 3, 410 in figure 4), according to one embodiment, comprises: a communication circuit (190 in figure 1, 202 in figure 2); and at least one processor (120 in figure 1, 204 in figure 2) connected to the communication circuit (190 in figure 1, 202 in figure 2). The at least one processor (120 in figure 1, 204 in figure 2) may check, through network discovery, whether the electronic device and an Internet of Things (IoT) device belong to the same network. The at least one processor (120 in figure 1, 204 in figure 2) may check whether a session between the IoT device and a cloud has been disconnected. The at least one processor (120 in figure 1, 204 in figure 2) may provide a function of reconnecting the session between the IoT device and the cloud if the electronic device and the IoT device belong to the same network, and the session between the IoT device and the cloud has been disconnected.

## Description

### [Technical Field]

The disclosure relates to a method for controlling reconnection between an external electronic device and a cloud when the connection between the external electronic device and the cloud is released.

### [Background Art]

The Internet of Things (IoT) refers to technology for accessing the Internet by equipping various things with sensors and communication functionality.

IoT is an artificial intelligence technology capable of exchanging data between things connected via the Internet, self-analyzing the data, providing learned information to the user or allowing the user to remotely control them. Here, the things may be various embedded systems, e.g., home appliances, mobile devices, or wearable devices. IoT-connected things may connect to the Internet using their own unique IP addresses for distinguishing them from others and may have sensors for obtaining data from an external environment.

IoT is also highly useful for the purpose of controlling various electronic devices in the home. The user may control electronic devices, such as a TV, a washing machine, or an air conditioner, to perform their respective specialized services in the home IoT environment and may easily share information thereabout.

### [Detailed Description of the Invention]

### [Technical Solution]

According to an embodiment, an electronic device comprises a communication circuit and at least one processor connected to the communication circuit. The at least one processor may identify whether the electronic device and an Internet of things (IoT) belong to the same network through a network search. The at least one processor may identify whether a session between the IoT device and a cloud is released. The at least one processor may provide a function of reconnecting the session between the IoT device and the cloud when the electronic device and the IoT device belong to the same network, and the session between the IoT device and the cloud is released.

According to an embodiment, a method for operating an electronic device may comprise identifying whether the electronic device and an Internet of things (IoT) belong to the same network through a network search. The method for operating the electronic device may comprise identifying whether a session between the IoT device and a cloud is released. The method for operating the electronic device may comprise providing a function of reconnecting the session between the IoT device and the cloud when the electronic device and the IoT device belong to the same network, and the session between the IoT device and the cloud is released.

According to an embodiment, there may be provided a computer-readable storage medium storing at least one instruction. The at least one instruction may, when executed by at least one processor, enable an electronic device to perform a plurality of operations. The plurality of operations may comprise identifying whether the electronic device and an Internet of things (IoT) belong to the same network through a network search. The plurality of operations may comprise identifying whether a session between the IoT device and a cloud is released. The plurality of operations may comprise providing a function of reconnecting the session between the IoT device and the cloud when the electronic device and the IoT device belong to the same network, and the session between the IoT device and the cloud is released.

### [Brief Description of the Drawings]

FIG. 1 is a block diagram schematically illustrating an electronic device in a network environment according to an embodiment;
FIG. 2 is a block diagram illustrating an electronic device according to an embodiment;
FIG. 3 is a view illustrating an example of an IoT environment according to an embodiment;
FIG. 4 is a view illustrating another example of an IoT environment 400 according to an embodiment;
FIGS. 5A, 5B, and 5C illustrate an example of an offline display and guide providing screen according to an embodiment;
FIG. 6 illustrates an example of a discovery schedule for searching for an offline electronic device on an IoT application according to an embodiment;
FIG. 7 is a flowchart illustrating a recovery process when an electronic device discovers an IoT electronic device by a network search according to an embodiment;
FIG. 8 is a flowchart illustrating a recovery process when an electronic device fails to discover an IoT device by a network search according to an embodiment;
FIG. 9 is a flowchart illustrating a connection method when an electronic device discovers an IoT electronic device by a network search according to an embodiment;
FIG. 10 is a flowchart illustrating a method in which an electronic device registers Wi-Fi AP information in a cloud after onboarding according to an embodiment;
FIGS. 11A and 11B illustrate examples of error code when an IoT device is in an offline state;
FIG. 12 illustrates an example of a UI providing a simple diagnosis user guide by an electronic device according to an embodiment;
FIG. 13 illustrates an example of a UI providing a diagnose-and-reconnect user guide by an electronic device according to an embodiment;
FIG. 14 illustrates an example of a UI providing a recommendation card on a favorites tab by an electronic device according to an embodiment;
FIG. 15 illustrates an example of a UI providing connection diagnosis on a device card according to an embodiment;
FIG. 16 illustrates an example of a UI providing connection diagnosis on a summary card according to an embodiment;
FIGS. 17A and 17B illustrate an example of a UI providing a simple reconnection recovery process by an electronic device according to an embodiment; and
FIGS. 18A and 18B illustrate an example of a UI providing a simple reconnection recovery process by an electronic device according to an embodiment.

### [Mode for Carrying out the Invention]

Hereinafter, an embodiment of the disclosure is described with reference to the accompanying drawings. When determined to make the subject matter of an embodiment of the disclosure unclear, the detailed description of the relevant known art or functions may be skipped. The terms described below are defined considering the functions in embodiments of the present disclosure and may be replaced with other terms according to the intention or practice of the user or operator. Therefore, the terms should be defined based on the overall disclosure.

The terms as used herein are provided merely to describe some embodiments thereof, but not to limit an embodiment of the disclosure. The terms as used herein are provided merely to describe some embodiments thereof, but not to limit the scope of other embodiments of the present disclosure. Unless otherwise defined, all terms including technical and scientific terms used herein have the same meaning as commonly understood by one of ordinary skill in the art to which the embodiments of the disclosure pertain and should not be interpreted as overly broad or narrow. As used herein, terms wrong or inappropriate for representing the spirit of the disclosure may be replaced with and understood as more proper ones to represent the spirit of the disclosure by one of ordinary skill in the art. General terms as used herein should be interpreted in the context of the specification or as defined in dictionaries.

As used herein, the singular forms "a," "an," and "the" are intended to include the plural forms as well, unless the context clearly indicates otherwise. As used herein, the term "comprise " or "include" should not be interpreted as necessarily including all of several components or operations set forth herein but should rather be interpreted as omitting some components or operations or adding more components or operations.

As used herein, the terms "first" and "second" may be used to describe various components, but the components should not be limited by the terms. The terms are used only to distinguish one component from another. For example, a first component may be denoted a second component, and vice versa without departing from the scope of the present disclosure.

It will be understood that when an element or layer is referred to as being "on," "connected to," "coupled to," or "adjacent to" another element or layer, it can be directly on, connected, coupled, or adjacent to the other element or layer, or intervening elements or layers may be present. In contrast, when a component is "directly connected to" or "directly coupled to" another component, no other intervening components may intervene therebetween.

Hereinafter, an embodiment of the disclosure will be described in detail with reference to the accompanying drawings. The same reference denotations may be used to refer to the same or substantially the same elements throughout the specification and the drawings. No duplicate description of the same elements is given herein. When determined to make the subject matter of an embodiment of the disclosure unclear, the detailed description of the known art or functions may be skipped. The accompanying drawings are provided for an easier understanding of the spirit of the reception but the disclosure should not be limited thereby. It should be interpreted that the spirit of the disclosure may encompasses all other changes, equivalents, or replacements of those shown in the drawings.

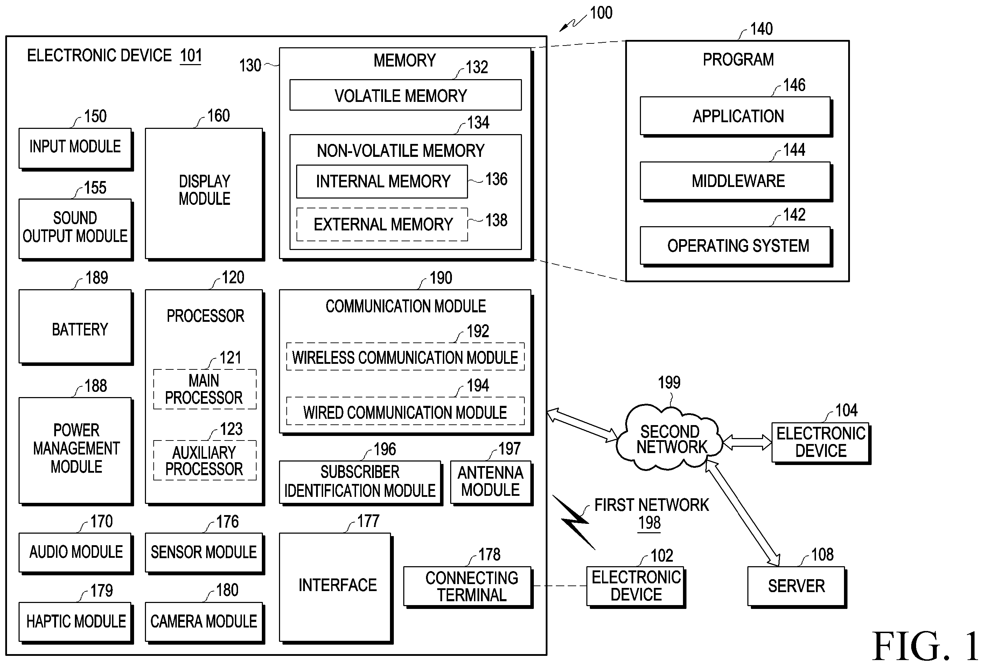

FIG. 1 is a block diagram schematically illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. According to an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store a piece of data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support a requirement specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment of the disclosure may be a type of device. The electronic devices may include, e.g., a portable communication device (e.g., a smartphone), a computer device, a portable multimedia device, a portable medical device, a camera, a wearable device, a home appliance, a wireless earphone, or ear buds. The electronic devices according to an embodiment are not limited to those described above.

An embodiment of the disclosure and terms used therein are not intended to limit the technical features described in the disclosure to specific embodiments, and should be understood to include a modification, equivalent, or substitute of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

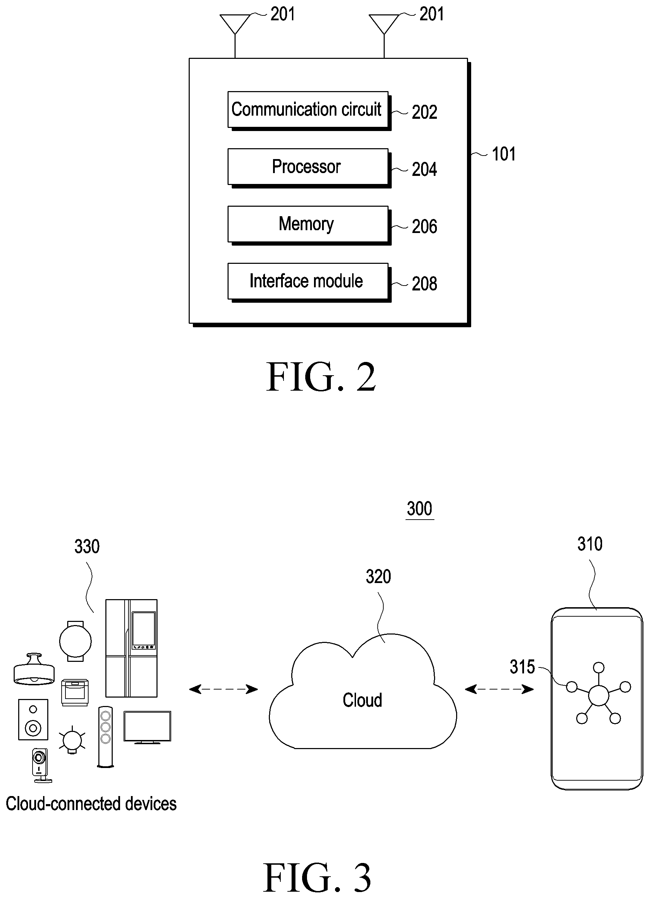

FIG. 2 is a block diagram illustrating an electronic device according to an embodiment.

Referring to FIG. 2, an electronic device (e.g., the electronic device 101 of FIG. 1) may be a device that controls an external electronic device in an IoT environment. The electronic device 101 may include a communication circuit 202 (e.g., the communication module 190 of FIG. 1) that transmits and receives signals using one or more antennas 201.

The electronic device 101 may include a processor 204 (e.g., the processor 120 of FIG. 1) that may be implemented as one or more single-core processors or one or more multi-core processors, and memory 206 (e.g., the memory 130 of FIG. 1) that stores instructions for the operation of the electronic device 101.

The electronic device 101 may include an interface module 208 (e.g., the interface 177 of FIG. 1) that provides a wired and/or wireless interface for communicating with components outside the network. At least some of one or more antennas 201, communication circuit 202, or interface module 208 may be implemented as at least part of the communication module 190 and antenna module 198 of FIG. 1, for example.

According to an embodiment of the disclosure, the electronic device 101 may include a communication circuit 202 and at least one processor 204. At least one processor 204 may identify whether the electronic device and the Internet of things (IoT) device belong to the same network through a network search. At least one processor 204 may identify whether the session between the IoT device and the cloud is released. When the electronic device and the IoT device belong to the same network, and the session between the IoT device and the cloud is released, the at least one processor 204 may provide a function for reconnecting the session between the IoT device and the cloud.

The disclosure proposes a method for conveniently reconnecting an external electronic device to the cloud by the control of the electronic device when the connection between the external electronic device and the cloud is disconnected. The electronic device may be displayed as offline on an IoT application (e.g., SmartThings app) for various reasons, such as device issues, AP issues, cloud errors, or IoT application issues.

According to an embodiment, in order to diagnose the cause of the disconnection issue, the cause of the disconnection may be analyzed through direct connection diagnosis with an external electronic device, and a connection recovery guide may be provided to the user. According to an embodiment, for a D2D connection to the electronic device, a guide screen for changing the electronic device to a join mode may be provided (or displayed) and, when the electronic device changes to the join mode, discovery and/or connection may be performed. According to an embodiment, when the electronic device changes to the join mode through direct manipulation, D2D connection may fail due to a high SoftAP, BLE connection failure.

According to an embodiment, even when the electronic device is connected to the network, and session with the cloud (e.g., SmartThings cloud) is disconnected, the network connection of the electronic device is released, and a D2D procedure is performed. Thus, despite a normal network connection, unnecessary release of network connection may occur.

According to an embodiment, being in the same network as the electronic device or the in-home network is required for direct connection diagnosis, but the user may perform a direction connection diagnosis method on the electronic device in an out-home environment or in a different network environment.

FIG. 3 is a view illustrating an example of an IoT environment according to an embodiment.

Referring to FIG. 3, an IoT environment 300 may include an electronic device 310, a cloud 320, and cloud-connected devices 330. According to an embodiment, the IoT environment 300 may mean a manner that connects cloud-connected devices 300, e.g., home appliances, via various types of communication networks and relays and controls them by a local server. According to an embodiment, the IoT environment 300 may provide device search and control while controlling various communication protocols, such as Bluetooth (BT), Bluetooth low energy (BLE), Wi-Fi, peer-to-peer (P2P) network, universal plug and play (UPnP), Cloud, or ultra-wideband (UWB). According to an embodiment, the IoT environment 300 may be implemented as an open platform to be able to connect not only a specific brand of sensor or product but also other brands of products. According to an embodiment, the IoT environment 300 may be implemented as a closed platform to be able to connect a specific brand of sensor and product.

According to an embodiment, an application 315 (e.g., the application 146 of FIG. 1) executable by an operating system (e.g., the operating system 142 of FIG. 1) may be installed on the electronic device 310 (e.g., the electronic device 101 of FIG. 1). According to an embodiment, the application 315 may be preloaded on the electronic device 310 when manufactured or be downloaded from an external electronic device(e.g., the electronic device 102 or 104 of FIG. 1 or the server 108 of FIG. 1) or updated. According to an embodiment, the application 315 may identify the state of the cloud-connected devices 330 registered with the server in the cloud 320 and control the cloud-connected devices 330. According to an embodiment, the application 315 may control the cloud-connected devices 330 registered with the server in the cloud 320 to be automatically operated at a predetermined time or receive notifications from the cloud-connected devices 330. According to an embodiment, the application 315 may control and manage smart home appliances or Internet of Things (IoT) through the electronic device 310 and wiredly or wirelessly connect with nearby devices. For example, the cloud-connected devices 330 may include at least one of TVs, speakers, refrigerators, kimchi refrigerators, wine cellars, washers, driers, air dressers, ovens, dish washers, cooktops, robot vacuums, air conditioners, and air purifiers.

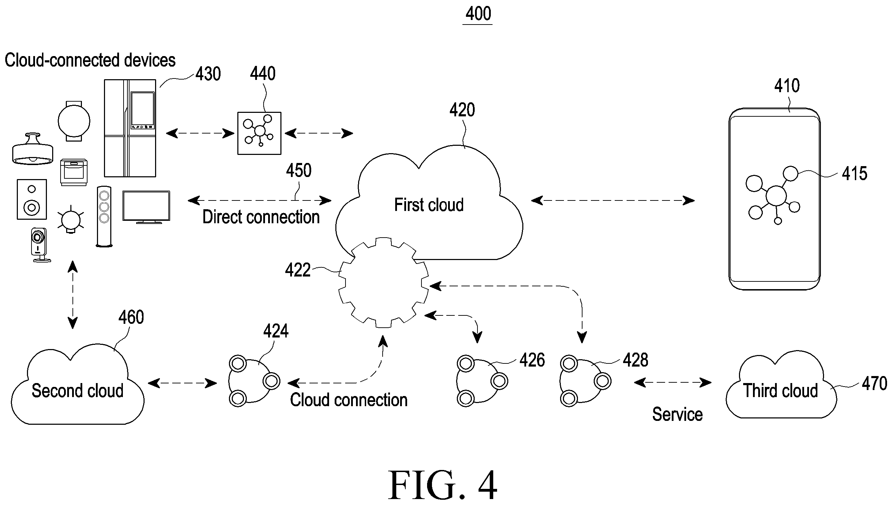

FIG. 4 is a view illustrating another example of an IoT environment 400 according to an embodiment.

Referring to FIG. 4, an IoT environment 400 may include an electronic device 410, a first cloud 420, cloud-connected devices 430 (e.g., the cloud-connected devices 330 of FIG. 3), a hub 440, a second cloud 460, and/or a third cloud 470. According to an embodiment, the IoT environment 400 may provide substantially the same or similar environment to the IoT environment 300 described in connection with FIG. 3. According to an embodiment, an application 415 (e.g., the application 146 of FIG. 1) executable by an operating system (e.g., the operating system 142 of FIG. 1) may be installed on the electronic device 410 (e.g., the electronic device 101 of FIG. 1). According to an embodiment, the application 415 may mean a client application that registers the cloud-connected devices 430 with the first cloud 420 and remotely controls the registered devices. According to an embodiment, the application 415 may identify the state of the cloud-connected devices 430 registered with the server in the first cloud 420 and control the cloud-connected devices 430. According to an embodiment, the application 415 may control the cloud-connected devices 430 registered with the server in the first cloud 420 to be automatically operated at a predetermined time or receive notifications from the cloud-connected devices 430. According to an embodiment, the application 415 may control and manage smart home appliances or Internet of Things (IoT) through the electronic device 310 and wiredly or wirelessly connect with nearby devices.

According to an embodiment, the device connectable to the first cloud 420 may be connected to the first cloud 420 in the type of hub-connected 440, direct-connected 450, or cloud-connected 424 or 428. According to an embodiment, the first cloud 420 may include a server that manages or controls the electronic device 410 and the cloud-connected devices 430. According to an embodiment, the server in the first cloud 420 may store information transmitted/received between the electronic device 410 and the cloud-connected devices 430, relay communication between the electronic device 410 and the cloud-connected devices 430, and support communication of the electronic device 410 and the cloud-connected devices 430. According to an embodiment, the first cloud 420 may implement an application programming interface (API) which is a language or message format used for communication between operating system and application program. According to an embodiment, the first cloud 420 may be connected with the cloud-connected devices 430 via the hub 440. According to an embodiment, the hub 440 may connect the first cloud 420 and the cloud-connected devices 430 through a communication function, such as ZigBee, Zwave, LAN, or Matter. According to an embodiment, the hub 440 may mean a device (e.g., gateway) that relays communication between the first cloud 420 and the cloud-connected devices 430. According to an embodiment, the hub 440 may be a device implemented in the first cloud 420 or implemented as a separate device (e.g., external server).

According to an embodiment, the first cloud 420 may be connected with the cloud-connected devices 430 via direct connection 450 without using the hub 440. According to an embodiment, at least one of the cloud-connected device 430 may be directly connected to a Wi-Fi AP and be connected to the first cloud 420.

According to an embodiment, the first cloud 420 may be connected with the cloud connector 424 using the API 422 and communicate with the second cloud 460. According to an embodiment, the operator who provides service on the first cloud 420 may differ from the operator who provides service on the second cloud 460. According to an embodiment, the cloud connector 424 may relay communication between different clouds (e.g., the first cloud 420 and the second cloud 460). According to an embodiment, the cloud connector 424 may be a hardware device or software module implemented in the first cloud 420. According to an embodiment, the cloud connector 424 may be a hardware device or software module implemented outside the first cloud 420. According to an embodiment, the cloud connector 424 may be a separate server implemented outside the first cloud 420.

According to an embodiment, the first cloud 420 may be connected with an automation function 426 using the API 422. The automation function 426 may control each of the cloud-connected devices 430 connected to the first cloud 420 to perform its defined operation without a user command (or input) if a condition set in the application 415 by the user is met. According to an embodiment, the automation function 426 may be a hardware device or software module implemented in the first cloud 420. According to an embodiment, the automation function 426 may be a hardware device or software module implemented outside the first cloud 420. According to an embodiment, the automation function 426 may be a separate server implemented outside the first cloud 420. According to an embodiment, in response to a user input, the application 415 may set a condition, e.g., time (e.g., specific time, specific time period, always, or day), device state, member location (e.g., check on whether it is in the initially set place), place state, or weather. According to an embodiment, if the condition set by the application 415 is met, the automation function 426 may control the cloud-connected devices 430 connected to the first cloud 420 to perform functions, e.g., device control, smartphone notification, play voice messages through speaker, place state change, or mode execution.

According to an embodiment, the first cloud 420 may be connected with the cloud connector 428 using the API 422 and communicate with the third cloud 470. According to an embodiment, the operator who provides service on the first cloud 420 may differ from the operator who provides service on the third cloud 470. According to an embodiment, the cloud connector 428 may relay communication between different clouds (e.g., the first cloud 420 and the third cloud 470). According to an embodiment, the cloud connector 428 may be a hardware device or software module implemented in the first cloud 420. According to an embodiment, the cloud connector 428 may be a hardware device or software module implemented outside the first cloud 420. According to an embodiment, the cloud connector 428 may be a separate server implemented outside the first cloud 420.

According to an embodiment, the cloud-connected devices 430, which are connected to the first cloud 420 via hub-connected 440, direct-connected 450, or cloud-connected 424 or 428, if authentication is completed, may be onboarded (or registered) to the first cloud 420 through the application 415. According to an embodiment, onboarding may be a process of registering at least one electronic device with the first cloud 420 through the application 415.

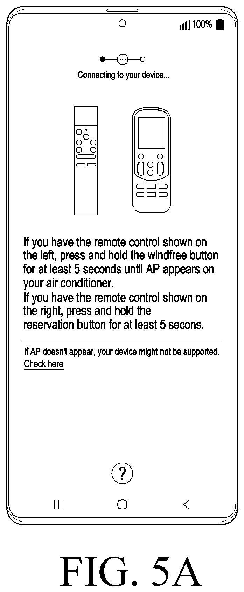

FIGS. 5A to 5C illustrate an example of an offline display and guide providing screen according to an embodiment.

Referring to FIG. 5A, when at least one cloud connection device (or IoT device) (e.g., air conditioner) is not connected to an access point (AP_, the electronic device may provide information (or display) indicating that at least one cloud connection device is offline to the user, and may provide a guide so that at least one cloud connection device is connected to the AP. For example, depending on the form/type of the remote control of the air conditioner, the electronic device may provide a different guide so that the air conditioner is connected to the AP.

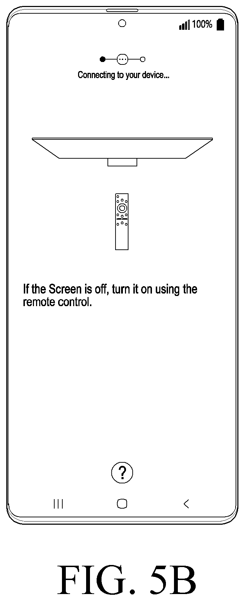

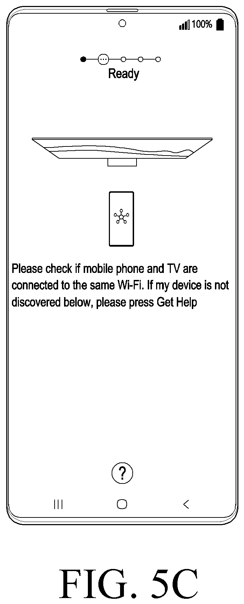

Referring to FIGS. 5B and 5C, the electronic device may provide (or display) information indicating that at least one cloud connection device (or IoT device) (e.g., TV) is offline to the user, and may provide a guide so that at least one cloud connection device is connected to the AP. Referring to FIG. 5B, when the TV screen is turned off, the electronic device may provide a guide for the user to turn on the TV screen using the remote control of the TV. Referring to FIG. 5C, the electronic device may provide a guide to identify whether the electronic device and the TV are connected to the same Wi-Fi. The electronic device may provide an additional guide when the electronic device and the TV are not connected to the same Wi-Fi.

According to an embodiment, an IoT application (e.g., a SmartThings application) executed on the electronic device may set a location (e.g., a house, a company, etc.) and control to onboard at least one IoT device (or at least one external electronic device). According to an embodiment, the IoT application may share the location through an invite function to grant a control right to an IoT device within the location. According to an embodiment, the IoT device invited to the location may control the device in the same manner as the location owner, and may onboard the IoT device to the invited location or perform a connection diagnosis process.

According to an embodiment, when the registered IoT device is disconnected from the cloud (e.g., SmartThings Cloud), it may be displayed as offline on the IoT device or device card. According to an embodiment, a direct connection diagnosis process may be provided when direct connection diagnosis with an offline IoT device is possible. For example, the direct connection diagnosis process may be provided through a pop-up in the device or through a recommendation card in the application. According to an embodiment, when the offline IoT device is capable of a direct connection diagnosis process, the IoT device may be in the house and may be in a state in which D2D connection is possible.

Whether the electronic device owned by the user may perform the connection diagnosis process may be performed according to the order of (1) to (8) below.
(1) The IoT application (e.g., SmartThings application) executed on the electronic device may control auto detect according to a discovery schedule.
(2) If the discovered electronic device is in an offline status, essential information may be obtained from the cloud using the device id.
   A. For BLE-type devices, owned status (O:unowned, 1:owned) may additionally be reported, and essential information may be identified from the cloud only when the owned status is owned. (When the device is factory reset, it is displayed as offline on the device card, but the device should be registered as unowned status)
(3) After hashing the mac address of the discovered electronic device, compares it with the mac address of the essential information to determine whether it is the same device.
(4) When the essential information does not include a mac address, determines whether it is the same device by comparing SSIDs and serial numbers according to priority.
(5) If determined to be the same device, a device exterior image may be obtained from the server based on mnId or setupId.
(6) The user is informed of whether the electronic device is offline through a popup or the card, and a guide is provided to perform a connection diagnosis process.
(7) The guide provided in the popup may be displayed differently depending on the discovery method. The IoT application (e.g., SmartThings application) performs discovery according to a discovery schedule to search for an offline device. For example, when the detected type is L3, mDNS, or UPNP as a result of the discovery, it is the case where it is discovered through a network search. For example, when the detected type is BLE or Wi-Fi AP as a result of the discovery, a self-diagnosis process may be performed.
   A. When a device is discovered through the network search, a recover button may be provided in the popup and, when the 'recover' is pressed by the user, connection may be directly recovered on the popup. If recovery fails, a diagnose button may be provided, and a diagnosis process may be provided.
   B. When a device is discovered on BLE or Soft-AP, a "move to self-diagnosis" button may be provided for enabling diagnosis.
(8) A register service may be provided so that it is searched over the same network after the electronic device registers Wi-Fi AP information in the cloud after onboarding. A serviceName, a serviceType, and a port may be provided for simple diagnosis in the register service.

Table 1 below shows an example of the essential information. According to an embodiment, the essential information may be stored in the server in a device registration process. According to an embodiment, the IoT application may obtain the essential information from the cloud.

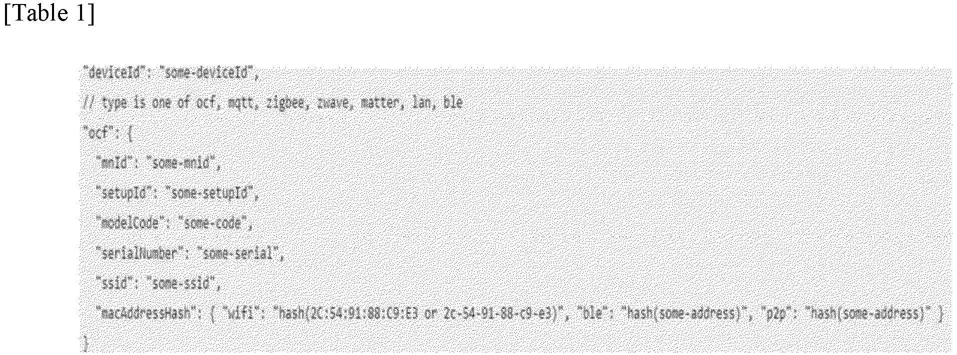

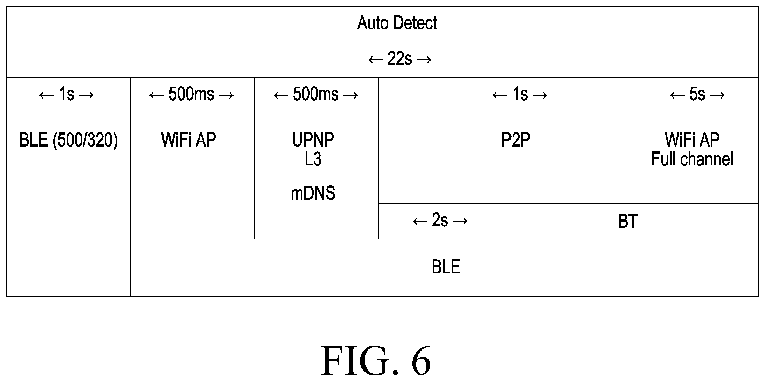

FIG. 6 illustrates an example of a discovery schedule for searching for an offline electronic device on an IoT application according to an embodiment.

According to an embodiment, the electronic device may perform a scan on the BLE, Wi-Fi, UPNP, P2P, BT, and/or BLE communication protocols to scan (or search for) external electronic devices located nearby when an application is driven. According to an embodiment, the electronic device may set a scan time limit for the BLE, Wi-Fi, UPNP, P2P, and BT communication protocols. According to an embodiment, the electronic device may set a scan time according to a time period in which an external electronic device may be found based on an advertising speed of the communication protocol. According to various embodiments, the electronic device may terminate the scan (or search) of the communication protocol when the application ends or switches to the background state.

Referring to FIG. 6, the electronic device may set the scan time for the BLE protocol to 1s (second), set the scan time for Wi-Fi protocol to 500ms, set the scan time for the L3, mDNS, UPNP protocol to 500ms, set the scan time for the P2P protocol to 15s, and may again set the scan time for the Wi-Fi protocol to 5s. The electronic device may set the scan time for the BT protocol to 2s and maintain the scan for the BLE protocol.

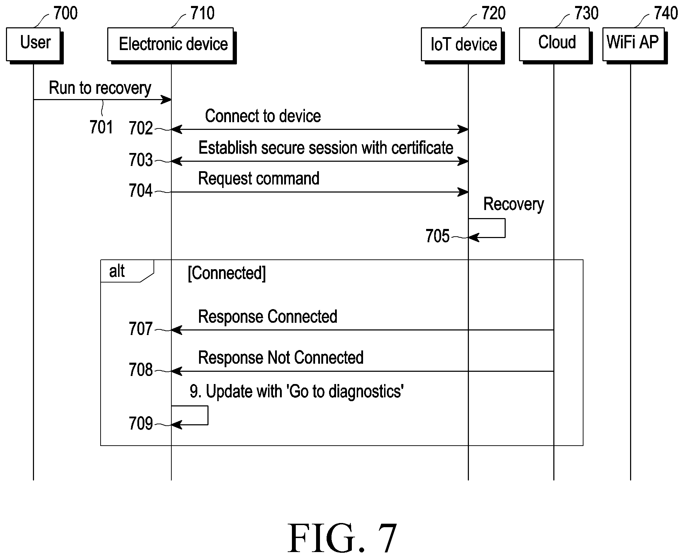

FIG. 7 is a flowchart illustrating a recovery process when an electronic device discovers an IoT electronic device by a network search according to an embodiment.

Referring to FIG. 7, when the electronic device 710 searches for the IoT device 720 through the discovery result network search (L3, DNS-SD/mDNS), the electronic device 710 provides a reconnect function in a popup, and a recovery process for reconnection may be performed in response to an input of the user 700. According to an embodiment, when the IoT device 720 belongs to the same network as the electronic device 710, and the connection between the IoT device 720 and the cloud 730 is disconnected, the electronic device 710 may control the IoT device 720 to be reconnected with the cloud 730.

In step 701, the user 700 may input a command (run to recovery) to the electronic device 710 so that the recovery process is performed, and in step 702, the electronic device 710 and the IoT device 720 may be connected. In step 703, the electronic device 710 and the IoT device 720 may establish a secure session using certificate, and in step 704, the electronic device 710 may transmit a request command to the IoT device 720. In step 705, the IoT device 720 may perform a recovery process on the cloud 730 in response to the request command.

In step 706, the electronic device 710 may transmit a request (request device status) for the connection status of the IoT device 720 to the cloud 730. In step 707, when the IoT device 720 and the cloud 730 are connected, the cloud 730 may transmit a response connected message to the electronic device 710. In step 708, when the IoT device 720 and the cloud 730 are not connected, the cloud 730 may transmit a response not connected message to the electronic device 710. After step 708, in step 709, the electronic device 710 may perform a diagnosis process (update with 'go to diagnostics').

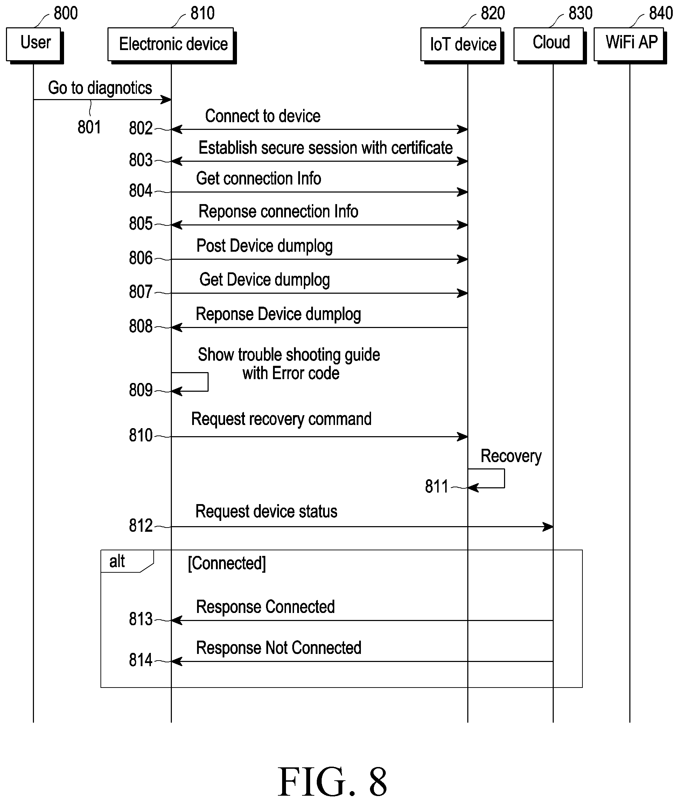

FIG. 8 is a flowchart illustrating a recovery process when an electronic device fails to discover an IoT device by a network search according to an embodiment.

Referring to FIG. 8, when the electronic device 810 searches for the IoT device 820 through Soft-AP and/or BLE as the discovery result, recovery may be performed through a self-diagnosis process. According to an embodiment, when the IoT device 820 does not belong to the same network as the electronic device 810, and the connection between the IoT device 820 and the cloud 830 is disconnected, the electronic device 810 may control the IoT device 820 to be reconnected with the cloud 830.

In step 801, the user 800 inputs a command (go-to diagnostics) to the electronic device 810 so that the diagnosis process is performed, and in step 802, the electronic device 810 and the IoT device 820 may be connected. In step 803, the electronic device 810 and the IoT device 820 may establish a secure session using certificate, and in step 804, the electronic device 810 may transmit a Get connection info message to the IoT device 820 to request connection information. In step 805, the electronic device 810 may receive a response (response connection info) to the connection information request from the IoT device 820. In step 806, the electronic device 810 may transmit a post device dumplog message to the IoT device 820, and in step 807, the electronic device 810 may transmit a Get device dumplog message to the IoT device 820 to obtain the device dumplog. In step 808, the electronic device 810 may receive a Response device dumplog message from the IoT device 820. In step 809, the electronic device 810 may show a troubleshooting guide as an error code.

In step 810, the electronic device 810 transmits a request recovery command message to the IoT device 820, and in step 811, the IoT device 820 may perform a recovery process for the cloud 830 in response to the request recovery command message.

In step 812, the electronic device 810 may transmit a request (request device status) for the connection status of the IoT device 820 to the cloud 830. In step 813, when the IoT device 820 and the cloud 830 are connected, the cloud 830 may transmit a response connected message to the electronic device 810. In step 814, when the IoT device 820 and the cloud 830 are not connected, the cloud 830 may transmit a response not connected message to the electronic device 810.

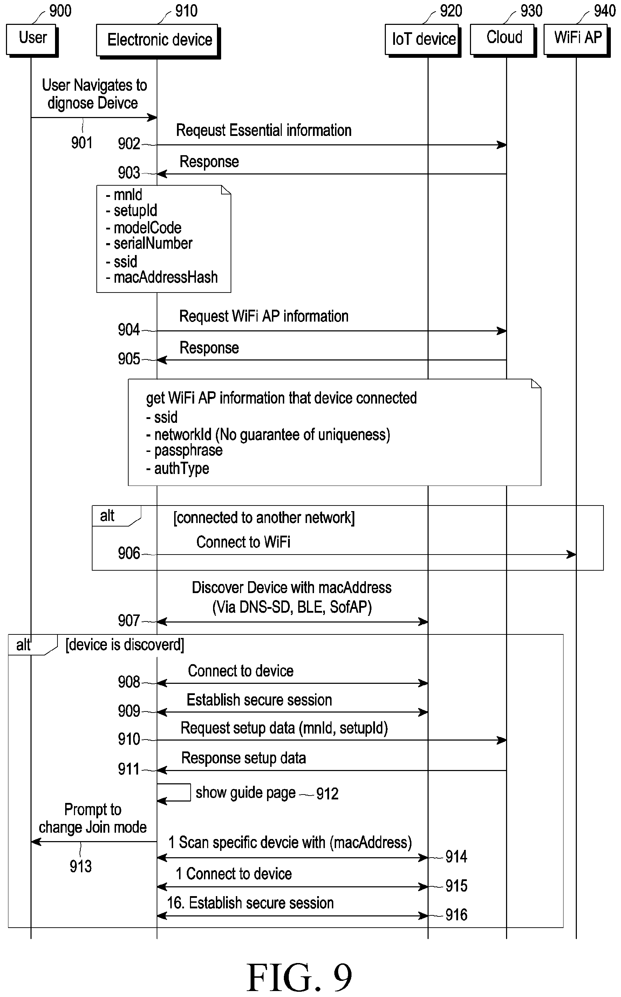

FIG. 9 is a flowchart illustrating a connection method when an electronic device discovers an IoT electronic device by a network search according to an embodiment.

Referring to FIG. 9, when the electronic device 910 searches for the IoT device 920 through a discovery result network search (L3, DNS-SD/mDNS), a connection process may be performed in response to an input of the user 900. According to an embodiment, when the IoT device 920 belongs to the same network as the electronic device 910, and the connection between the IoT device 920 and the cloud 930 is disconnected, the electronic device 910 may control the IoT device 920 to be connected with the cloud 930.

In step 901, the user 900 may input a search command for diagnosing the IoT device 920 to the electronic device 910. In step 902, the electronic device 910 requests essential information for the IoT device 920 from the cloud 930, and in step 903, the cloud 930 may transmit a response message to the request to the electronic device 910. According to an embodiment, the response message to the request may include at least one of mnId, setuId, modelCode, serialNumber, ssid, and macAddressHash. According to an embodiment, the electronic device 910 may receive essential information for the IoT device 920 from the server in the cloud 930.

In step 904, the electronic device 910 requests Wi-Fi AP information from the cloud 930, and in step 905, the electronic device 910 may receive a response message to the request from the cloud 930. According to an embodiment, the response message to the request may include at least one of ssid, networked (No guarantee of uniqueness), passphrase, and auth type.

When connected to another network, in step 906, the electronic device 910 may transmit a connect to Wi-Fi message to the Wi-Fi AP 940. In step 907, the electronic device 910 and the IoT device 920 may perform a discovery procedure with macAddress through DNS-SD, BLE, and SofAP.

When the IoT device 920 is discovered, in step 908, the electronic device 910 and the IoT device 920 may be connected. In step 909, the electronic device 910 and the IoT device 920 may establish a secure session. In step 910, the electronic device 910 may transmit a request setup data message (including mnId and setupId) to the cloud 930, and in step 911, the electronic device 910 may receive a response setup data message from the cloud 930. In step 912, the electronic device 910 may provide a guide page. In step 913, the electronic device 910 may provide the user 900 with a message to change the join mode.

In step 914, the electronic device 910 and the IoT device 920 may scan a specific device using macAddress. In step 915, the electronic device 910 and the IoT device 920 are connected, and in step 916, the electronic device 910 and the IoT device 920 may establish a secure session.

In FIG. 9, the user 900 may identify an offline device list through an offline diagnosis menu, diagnose and recover the device. According to an embodiment, the user 900 may search for an offline device through a network search by pressing the offline diagnosis service menu and then recover the connection of the offline device by simple diagnosis.

According to an embodiment, the electronic device 910 may receive Wi-Fi AP information connected by the IoT device 920 from the server in the cloud 930, and determine whether the electronic device 910 and the IoT device 920 are in the same network.

According to an embodiment, when Wi-Fi connected with the IoT device 920 is not discovered, e.g., when the electronic device 910 is not in the same network as the AP connected with the IoT device 920 or AP search fails due to a Wi-Fi issue, the electronic device 910 may provide a guide to the user 900 without direct connection diagnosis.

According to an embodiment, when the Wi-Fi connected to the IoT device 920 is discovered, and the electronic device 910 is not connected to the corresponding Wi-Fi, the electronic device 910 may be connected to Wi-Fi.

According to an embodiment, when the electronic device 910 is connected to the same network as the IoT device 920, the electronic device 910 may search for the IoT device 920 through a network search. According to an embodiment, different connection diagnosis methods and recovery methods may be performed depending on when the IoT device 920 owned by the user of the electronic device 910 is discovered and when the IoT device 920 is not discovered.

According to an embodiment, after hashing the Mac address of the discovered IoT device 920, comparison may be performed with the Mac address of the essential information, and it may be determined whether it is the same device. According to an embodiment, the electronic device 910 may compare the Mac address of the discovered IoT device 920 and the Mac address of the essential information and, if both are the same, identify that the essential information regards the IoT device 920. According to an embodiment, the Mac address is an address used to discern each device over the network and, because it is a device unique number, it is not changed as long as the device or the network component is not replaced, unlike the IP address. According to an embodiment, when the Mac address is not included in the essential information, determination of whether they are the same device may be performed by comparing SSIDs and serial numbers according to priority.

According to an embodiment, when an offline IoT device 920 owned by the owner or invited to the location is discovered, the electronic device 910 may perform a D2D connection with the IoT device 920. According to an embodiment, the electronic device 910 may establish a secure session based on the owner ID of the IoT device 920 and the certificate.

According to an embodiment, the IoT device 920 may not accept the connection when the owner ID transferred by the electronic device 910 and the device owner ID stored during onboarding do not match as a result of comparison.

According to an embodiment, the electronic device 910 may request an error code and connection information from the IoT device 920. According to an embodiment, when the cause of disconnection is a cloud error based on the error code received from the IoT device 920, the electronic device 910 may transmit a rebooting recovery command to the IoT device 920. According to an embodiment, the IoT device 920 may reboot and retry to sign in to the cloud 930. According to an embodiment, the electronic device 910 may monitor whether the IoT device 920 is connected.

According to an embodiment, when the cause of disconnection is a device specific error based on the error code received from the IoT device 920, the electronic device 910 may provide a user guide for the device specific error.

According to an embodiment, when the offline IoT device 920 owned by the owner is not discovered, the electronic device 910 may request a guide phrase and a device exterior image for D2D connection via mind and/or setupId from the cloud 930 and provide the user 900 with a guide with the received image and guide phrase.

According to an embodiment, the electronic device 910 and the IoT device 920 may perform a scan specific device using the mac address and determine whether the IoT device 920 discovered thereby is the owner's device.

According to an embodiment, if the IoT device 920 owned by the owner or invited to the location is discovered, the electronic device 910 and the IoT device 920 may perform a D2D connection. According to an embodiment, a secure session may be established with the electronic device 910 based on the certificate and the owner ID of the IoT device 920.

According to an embodiment, the IoT device 920 may not accept the connection when the owner ID transferred by the electronic device 910 and the device owner ID stored during onboarding do not match as a result of comparison. According to an embodiment, the electronic device 910 may request an error code and connection information from the IoT device 920. According to an embodiment, the electronic device 910 may identify the cause of disconnection based on the error code received from the IoT device 920 and provide a user action guide. According to an embodiment, the IoT device 920 may reboot and retry to sign in to the cloud 930. According to an embodiment, the electronic device 910 may monitor whether the IoT device 920 is connected.

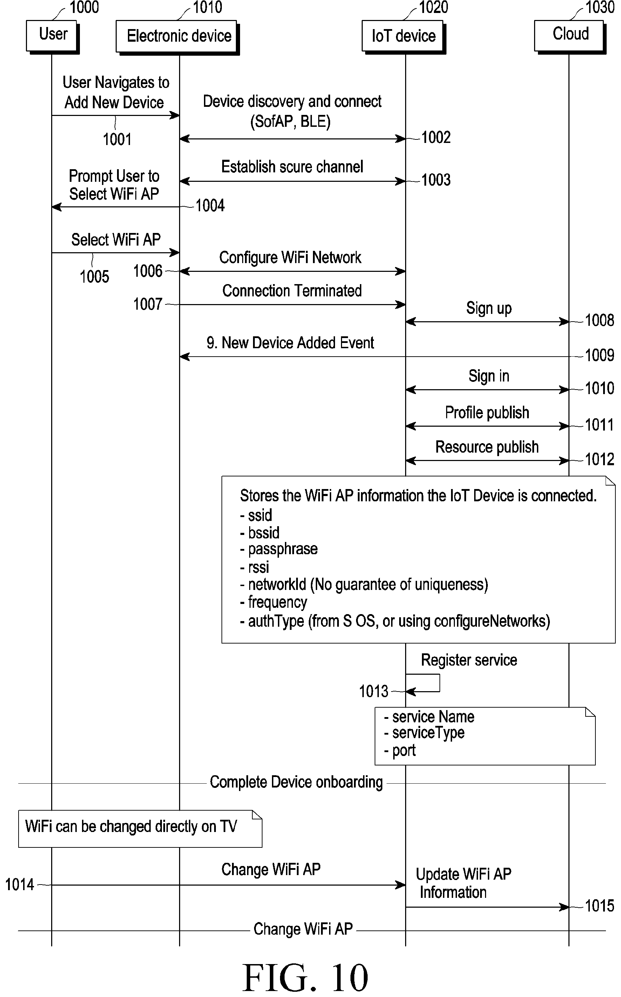

FIG. 10 is a flowchart illustrating a method in which an electronic device registers Wi-Fi AP information in a cloud after onboarding according to an embodiment. In FIG. 10, the IoT device 1020 may store Wi-Fi AP information in the cloud 1030 during the onboarding process.

Referring to FIG. 10, in step 1001, the user 1000 may input a search command to the electronic device 1010 to add a new device. In step 1002, the electronic device 1010 and the IoT device 1020 may perform device discovery and connection (e.g., through softAP and BLE). In step 1003, the electronic device 1010 and the IoT device 1020 may establish a secure channel. In step 1004, the electronic device 1010 may provide a message for selecting a Wi-Fi AP to the user 1000, and in step 1005, the user 1000 may transmit a Wi-Fi AP selection message to the electronic device 1010.

In step 1006, the electronic device 1010 and the IoT device 1020 may set up a Wi-Fi network, and in step 1007, the electronic device 1010 may transmit a connect terminated message to the IoT device 1020. In step 1008, the IoT device 1020 and the cloud 1030 may perform a sign-up procedure, and in step 1009, the cloud 1030 may transmit a new device added event message to the electronic device 1010. In step 1010, the IoT device 1020 and the cloud 1030 may perform a sign-in procedure. In step 1011, the IoT device 1020 and the cloud 1030 may perform a profile publish procedure, and in step 1012, the IoT device 1020 and the cloud 1030 may perform a resource publish procedure. According to an embodiment, information about the Wi-Fi AP connected to the IoT device 1020 may be stored. According to an embodiment, the Wi-Fi AP information may include at least one of ssid, bssid, passphrse, rssi, networked (No guarantee uniqueness), frequency, and authType (from S OS, or using configuredNetworks). In step 1013, the IoT device 1020 may register a service. According to an embodiment, the IoT device 1020 may include at least one of serviceName, serviceType, and port.

When the device onboarding procedure is completed, in step 1014, the user 1000 may request the IoT device 1020 to change the Wi-Fi AP. In step 1015, the IoT device 1020 may request the cloud 1030 to update Wi-Fi AP information. Thereafter, the Wi-Fi AP may be changed.

According to an embodiment, the cause of the disconnection between the cloud 1030 (e.g., SmartThings cloud) and the IoT device 1020 may be one of three cases (CASE 1 to 3) as follows.
- CASE 1: When the IoT device 1020 fails to connect to the router
- CASE 2: When the session with the cloud 1030 is disconnected although the IoT device 1020 is normally connected to the router
- CASE 3: When the connection is lost for IoT device 1020-specific reasons

According to an embodiment, when the connection with the cloud 1030 is disconnected, the IoT device 1020 may log the cause of disconnection and provide a D2D connection method with the electronic device 1010 according to the cause of disconnection.

When the connection fails due to a change in the password of the router in CASE 1, the IoT device 1020 may automatically switch to the Soft-AP mode or broadcast the BLE packet. According to an embodiment, when the password of the router is changed, the IoT device 1020 should perform onboarding again or receive the changed password through a connection diagnosis service. As a preliminary task for this, the mode of the IoT device 1020 may be automatically switched for D2D connection.

When the connection is lost according to CASE 2 and CASE 3, the electronic device 1010 may provide an easy connection of the IoT device 1020 to the cloud 1030 through a network service search in a state in which the IoT device 1020, together with the electronic device 1010, is connected to the local network. According to an embodiment, the IoT device 1020 may access the service provided by the local network on the IoT application. Accordingly, the IoT application may designate a service type and a name of the device instance providing a desired service type and request a service.

According to an embodiment, when a device frequently used by the user or a device scheduled to be executed is disconnected, it is possible to let it known quickly and, when the environment is an in-home environment capable of diagnosis, facilitate device connection and recover the connection without an additional operation by the user.

According to an embodiment, the electronic device 1010 may discover an offline device and inform the user 1000 of a device having a high priority according to priority. According to an embodiment, when simple diagnosis is possible in the same network, the priorities may be determined according to the time of the disconnection, device type, automation conditions, and/or addition as an action device.

According to an embodiment, the electronic device 1010 may recommend a reconnection for a device (device to be used soon in the automation prioritized) through a notification and/or popup. According to an embodiment, the electronic device 1010 may recommend, and/or recommend a reconnection for, the most recently used device (the device having most recently entered the plug-in prioritized) through the summary card. According to an embodiment, the electronic device 1010 may recommend, and/or recommend, through the summary card, a reconnection for a device disconnected due to battery shortage. According to an embodiment, the electronic device 1010 may set low reconnection priorities for devices that repeat connection/disconnection like the plug off of a home appliance.

According to an embodiment, when one or more devices are offline, the electronic device 1010 may sort and display the list of the offline devices according to the frequencies and priorities and provide a button for entering the diagnosis mode.

According to an embodiment, examples of a partially sorting method for providing a button for entering the diagnosis mode are A to C as follows.
A. Frequently disconnected devices (e.g., in the order of the most frequently disconnected devices for 24 hours)
B. The device disconnected for the longest time
C. The device which has already undergone diagnosis but not recovered has the lowest priority and is thus displayed the last

According to an embodiment, the electronic device 1010 may determine whether the electronic device 1010 is in the same network as the device based on information about the AP to which the device is connected in order to determine whether direct connection diagnosis is possible. According to an embodiment, the electronic device 1010 may determine whether the device discovered by the Soft AP, BLE, and On IP Network is the owner's device or a device invited to the location in order to determine whether direct connection diagnosis is possible.

According to an embodiment, when the electronic device 1010 discovers a device through a network search, the electronic device 1010 may provide a user guide and/or a recovery function according to the error type received from the device.

According to an embodiment, the electronic device 1010 may determine whether the offline device may be recovered by simple diagnosis or diagnose-and-reconnect method and provide a simple diagnosis button or diagnose-and-reconnect method button on the device card to perform a recovery process in the background when the simple diagnosis button is selected.

According to an embodiment, the electronic device 1010 may compare the Wi-Fi/BLE Mac addresses, SSIDs, and serial numbers of the discovered devices according to priority in order to determine whether the registered device is offline. For example, in the case of BLE, the electronic device 1010 may determine whether the registered device is offline based on the Adv packet's own status and the cloud's device health.

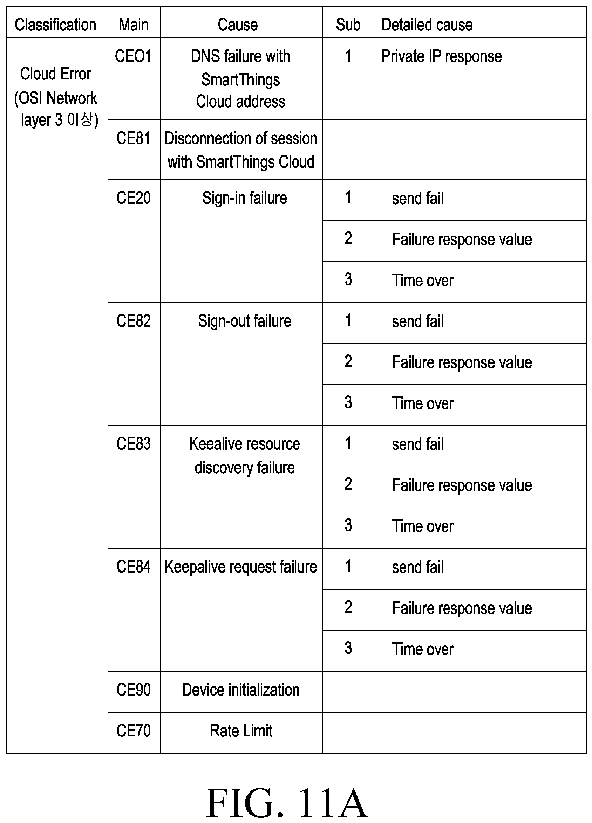

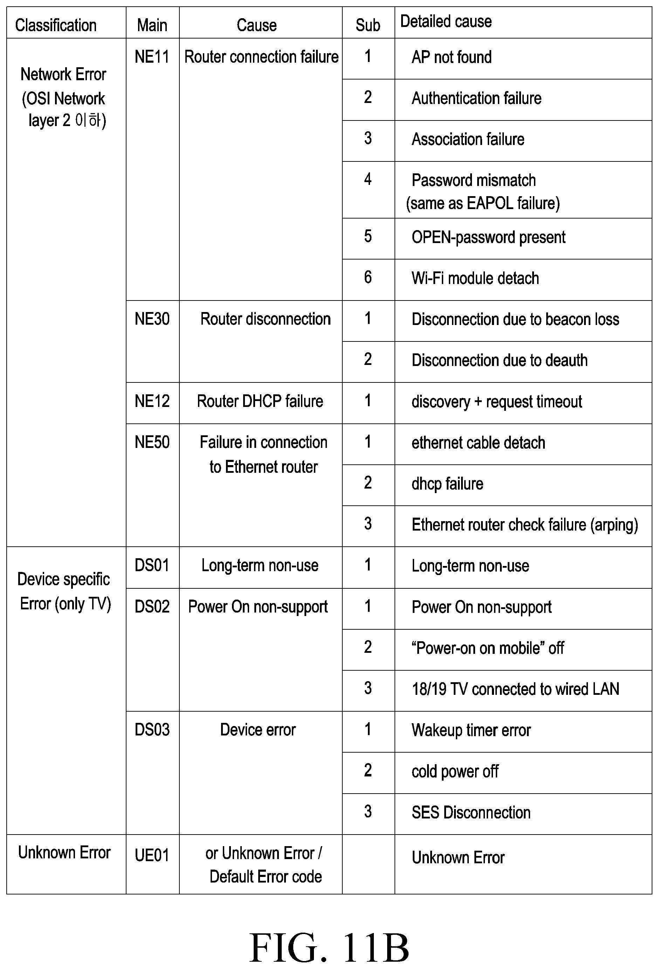

FIGS. 11A and 11B illustrate examples of error code when an IoT device is in an offline state.

Referring to FIG. 11A, an example where error code classification is Cloud Error (OSI Network layer 3 or higher) is shown. Error code CE01 may be attributed DNS failure with SmartThings Cloud address, and the detailed cause may be a private IP response issue. Error code CE81 may be attributed the disconnection between SmartThings Cloud and session. Error code CE20 may be attributed to the sign-in failure, error code CE82 to the sign-out failure, error code CE83 to the Keeperive resource discovery failure, and error code CE84 to the Keepalive request failure. Error code CE60 may be attributed to an Access token refresh failure, error code CE90 to device initialization, and error code CE70 to the Rate Limit.

Referring to FIG. 11B, an example where error code classification is Network Error (OSI Network Layer 2 or less), Device specific Error (only TV), or Unknown Error is shown.

When the error code classification is Network Error (OSI Network Layer 2 or less), error code NE11 may be attributed to a failure of connection to the router, error code NE30 to loss of the connection to the router, error code NE12 to a failure of DHCP to the router, and error code NE50 to a failure of connection to the Ethernet router.

When the error code classification is Device specific Error (only TV), error code DS01 may be attributed to long-term non-use, error code DS02 to power-on non-support, and error code DS03 to a device error. When the error code classification is an unknown error, the error code may be set to UE01.

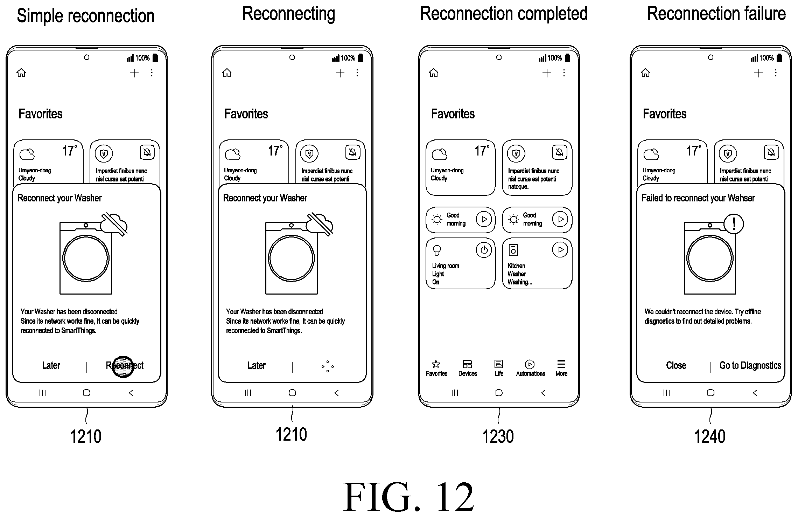

FIG. 12 illustrates an example of a UI providing a simple diagnosis user guide by an electronic device according to an embodiment.

According to an embodiment, when there is an offline device, and the user may perform direct diagnosis with the device in the home, a guide may be provided to allow the user to perform diagnosis by the simple reconnection method.

In step 1210, when the IoT device (e.g., a washer) is disconnected due to a network issue, the electronic device may provide a simple reconnect function to the IoT device (e.g., a washer). In step 1220, the electronic device may inform the user that simple reconnection of the IoT device (e.g., a washer) is in progress and, in step 1230, the electronic device may display that the reconnection of the IoT device (e.g., a washer) is completed. In step 1240, when the reconnection of the IoT device (e.g., a washer) fails, the electronic device may indicate that the reconnection of the IoT device (e.g., a washer) fails and then provide a diagnosis function (go to diagnostics).

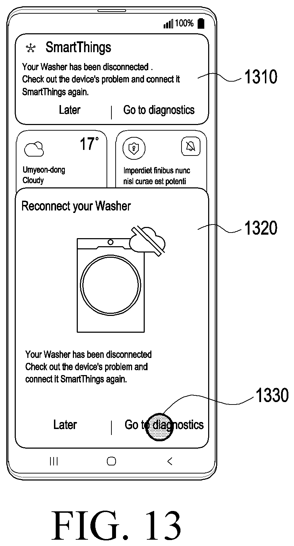

FIG. 13 illustrates an example of a UI providing a diagnose-and-reconnect user guide by an electronic device according to an embodiment.

Referring to FIG. 13, while the IoT application (e.g., SmartThings application) is not running, the diagnose-and-reconnect user guide may be provided as a note 1310 and, while the IoT application is running, the diagnose-and-reconnect user guide may be provided as a popup 1320. For example, the electronic device may start diagnosis on an offline external electronic device (e.g., a washer) in response to a user click input 1330 to the "Go to diagnostics" button image in the popup 1320.

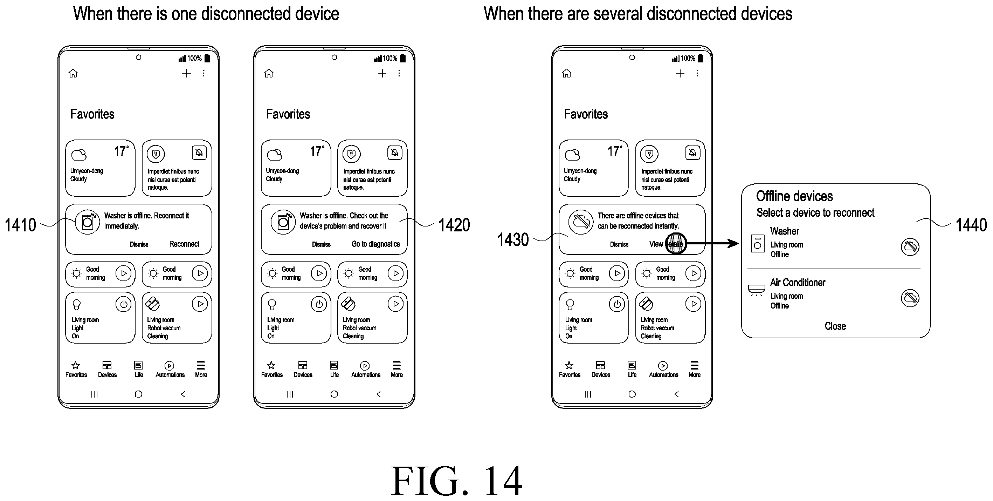

FIG. 14 illustrates an example of a UI providing a recommendation card on a favorites tab by an electronic device according to an embodiment.

Referring to FIG. 14, when there is one disconnected device, the electronic device may display, in the favorites tab, a recommendation card to indicate that the device (e.g., a washer) is offline and to perform immediate reconnection in step 1410. According to an embodiment, when there is one disconnected device, the electronic device may display, in the favorites tab, a recommendation card to indicate that the device (e.g., a washer) is offline and to identify, diagnose, and/or recover the issue with the device (e.g., a washer) in step 1420.

According to an embodiment, when there are several disconnected devices, the electronic device may display, in the favorites tab, a recommendation card indicating that there are several disconnected devices in step 1430. When detailed information about the recommendation card is requested by the user in step 1430, the electronic device may provide specific information about the disconnected devices in step 1440. According to an embodiment, the electronic device may recommend a reconnection for devices (devices to be used soon in the automation prioritized) included in the automation and the hub device through a notification and/or a popup according to priority.

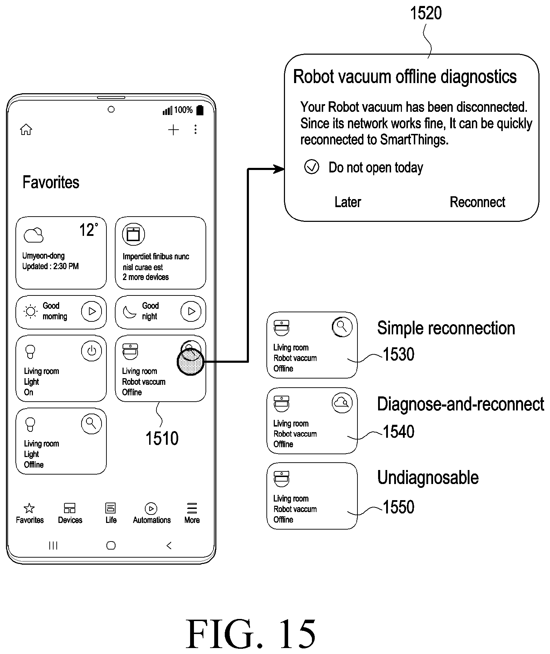

FIG. 15 illustrates an example of a UI providing connection diagnosis on a device card according to an embodiment.

Referring to FIG. 15, the electronic device may differently display the button image on the device card 1510 depending on whether the offline device (e.g., a robot vacuum) is recovered (1520 or 1530) through simple reconnection or whether reconnection after diagnosis should be performed (1540), or whether the device is one incapable of diagnosis (1550). According to an embodiment, when the offline device (e.g., a robot vacuum) may be recovered through simple reconnection, the electronic device may display details 1520 for the simple reconnection in response to a user input (e.g., a click on the button image on the device card).

According to an embodiment, if a user input is made to the simple reconnection button, reconnection may be performed in the background and, when reconnection fails, a popup may be displayed. (e.g., provides a dialog for description upon first tapping).

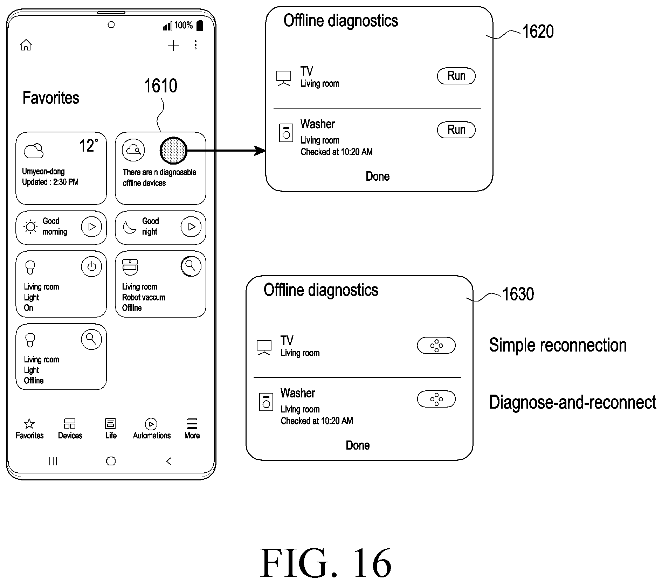

FIG. 16 illustrates an example of a UI providing connection diagnosis on a summary card according to an embodiment.

The electronic device may recommend a reconnection for the device most recently used according to the reconnection priority through the summary card. According to an embodiment, when one or more devices are offline, the list of the offline devices may be sorted and displayed according to the frequencies and priorities, and a button for entering the diagnosis mode may be provided.

Referring to FIG. 16, the electronic device may display information about diagnosable offline devices in step 1610. In step 1620, the electronic device may provide a diagnosis function on a plurality of offline devices (e.g., TV or washer) according to priority (e.g., order recently used, use frequencies, or priorities set by the user). After diagnosing the plurality of offline devices in step 1620, the electronic device may recommend simple reconnection for the higher-priority device (e.g., TV) and recommend diagnose-and-reconnect for the lower-priority offline device (e.g., washer) in step 1630. For example, when the user uses the TV within a preset time but does not use the washer within the preset time, the electronic device may recommend a simple reconnection for the offline TV and recommend a diagnose-and-reconnect for the offline washer.

According to an embodiment, an example of sorting according reconnection priority is as follows.
(1) Frequently disconnected devices (e.g., order of devices more frequently for 24 hours)
(2) Device disconnected for the longest time
(3) Device that has undergone diagnosis but not recovered has low priority and is thus displayed the last ('checked at 10:20AM' displayed).

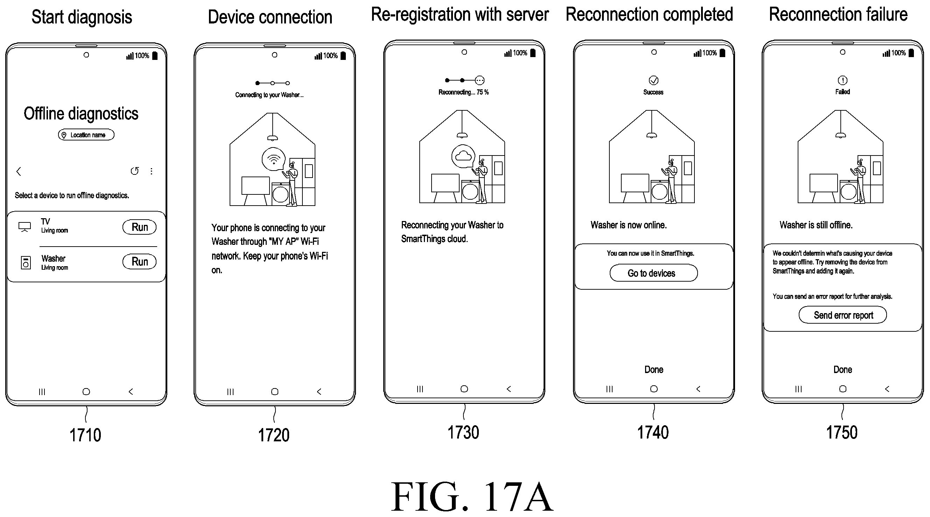

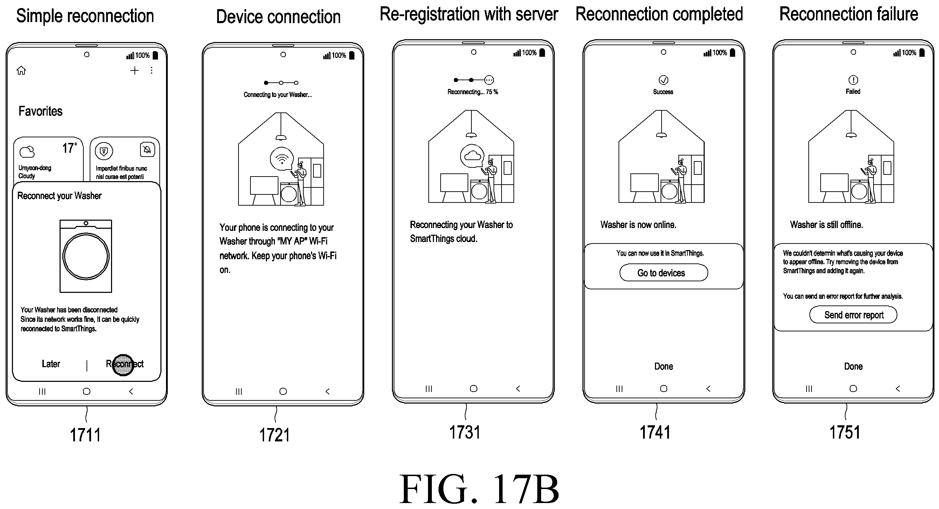

FIGS. 17A and 17B illustrate an example of a UI providing a simple reconnection recovery process by an electronic device according to an embodiment.

In step 1880, when reconnection of the offline device (e.g., a washer) is completed, the electronic device may display reconnection completed.

Referring to FIG. 17A, in step 1710, the electronic device starts diagnosing the offline device (e.g., a washer), and in step 1720, the electronic device may be connected to the offline device (e.g., a washer) through the Wi-Fi network. In step 1730, the electronic device controls the offline device (e.g., a washer) to be reconnected to the cloud (e.g., SmartThings cloud), and in step 1740, the electronic device may display reconnection completed when reconnection of the offline device (e.g., a washer) is completed. If the reconnection of the offline device (e.g., a washer) fails, in step 1750, the electronic device may indicate that the reconnection of the offline device (e.g., a washer) fails and provide an error report function.

Referring to FIG. 17B, in step 1711, the electronic device provides a simple reconnect function to the offline device (e.g., a washer), and in step 1721, the electronic device may be connected to the offline device (e.g., a washer) through the Wi-Fi network. In step 1731, the electronic device controls the offline device (e.g., a washer) to be reconnected to the cloud (e.g., SmartThings cloud), and in step 1741, the electronic device may display reconnection completed when reconnection of the offline device (e.g., a washer) is completed. If the reconnection of the offline device (e.g., a washer) fails, in step 1751, the electronic device may indicate that the reconnection of the offline device (e.g., a washer) fails and provide an error report function.

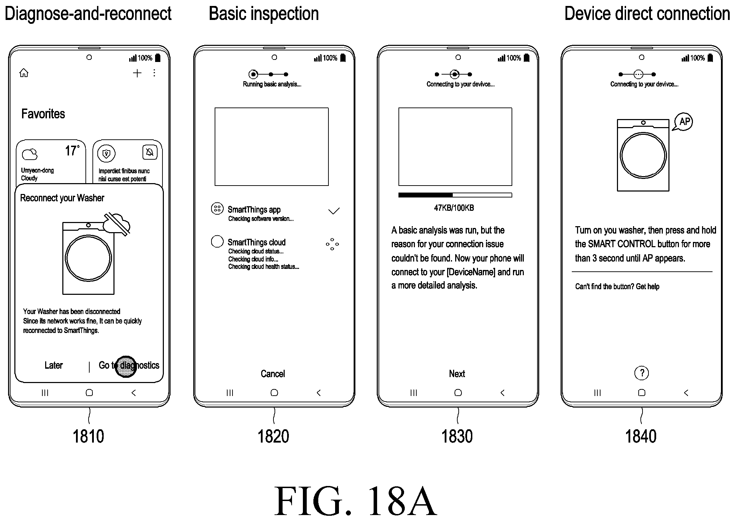

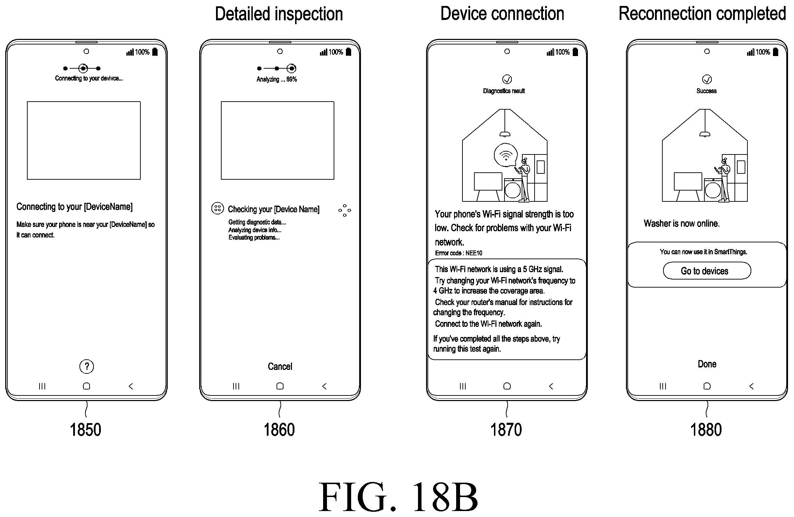

FIGS. 18A and 18B illustrate an example of a UI providing a simple reconnection recovery process by an electronic device according to an embodiment.

According to an embodiment, when the electronic device is not in the same network as the device or, although in the same network, is not connected to the network, the electronic device may provide a guide screen for D2D connection with the device, and may provide a device direct connection diagnosis and recovery process.

Referring to FIG. 18A, in step 1810, the electronic device may provide a diagnosis-and-reconnect function on the offline device (e.g., a washer) and, in steps 1820 and 1830, the electronic device may perform a basic inspection on the connection failure of the offline device (e.g., a washer). In step 1840, the electronic device may be directly connected to the offline device (e.g., a washer) and provide a manipulation guide for the offline device (e.g., a washer) to allow the offline device (e.g., a washer) to be connected to the AP.

Referring to FIG. 18B, in step 1850, the electronic device may try to connect with the offline device (e.g., a washer) and, in step 1860, the electronic device may perform a detailed inspection on the offline device (e.g., a washer). In step 1870, the electronic device may provide information about the diagnosis result for the offline device (e.g., a washer). In step 1880, when reconnection of the offline device (e.g., a washer) is completed, the electronic device may display reconnection completed.

According to an embodiment, an electronic device (101 of FIG. 1; 310 of FIG. 3; 410 of FIG. 4) comprises a communication circuit (190 of FIG. 1; 202 of FIG. 2) and at least one processor (120 of FIG. 1; 204 of FIG. 2) connected to the communication circuit (190 of FIG. 1; 202 of FIG. 2). The at least one processor (120 of FIG. 1, 204 of FIG. 2) may identify whether the electronic device and an Internet of things (IoT) belong to the same network through a network search. The at least one processor (120 of FIG. 1, 204 of FIG. 2) may identify whether a session between the IoT device and a cloud is released. The at least one processor (120 of FIG. 1, 204 of FIG. 2) may provide a function of reconnecting the session between the IoT device and the cloud when the electronic device and the IoT device belong to the same network, and the session between the IoT device and the cloud is released.

According to an embodiment, the at least one processor (120 of FIG. 1, 204 of FIG. 2) may request essential information for the IoT device from a server in the cloud through the communication circuit (190 of FIG. 1, 202 of FIG. 2). According to an embodiment, the at least one processor (120 of FIG. 1, 204 of FIG. 2) may receive a response message including the essential information for the IoT device from the server in the cloud through the communication circuit (190 of FIG. 1, 202 of FIG. 2). According to an embodiment, the essential information for the IoT device may include a setup ID, a model code, a serial number, an SSID, and a Mac address hash.

According to an embodiment, the at least one processor (120 of FIG. 1, 204 of FIG. 2) may request Wi-Fi AP information for the IoT device from a server in the cloud through the communication circuit (190 of FIG. 1, 202 of FIG. 2). According to an embodiment, the at least one processor (120 of FIG. 1, 204 of FIG. 2) may receive a response message including the Wi-Fi AP information for the IoT device from the server in the cloud through the communication circuit (190 of FIG. 1, 202 of FIG. 2).

According to an embodiment, the at least one processor (120 of FIG. 1, 204 of FIG. 2) may perform a discovery process for searching for the IoT device using a Mac address of the IoT device.

According to an embodiment, the at least one processor (120 of FIG. 1, 204 of FIG. 2) may establish a direct connection between the electronic device and the IoT device when the electronic device and the IoT device do not belong to the same network, and the session between the IoT device and the cloud is released.

According to an embodiment, the at least one processor (120 of FIG. 1, 204 of FIG. 2) may identify a plurality of offline IoT devices, and recommend reconnection of the plurality of IoT devices in order of higher priority based on respective reconnection priorities of the plurality of IoT devices.

According to an embodiment, the at least one processor (120 of FIG. 1, 204 of FIG. 2) may receive an error code regarding a cause of the release of the session between the IoT device and the cloud from the IoT device through the communication circuit (190 of FIG. 1, 202 of FIG. 2). According to an embodiment, after the IoT device is onboarded, Wi-Fi AP information for the IoT device may be registered in the server in the cloud.

## Claims

1. An electronic device (101 of FIG. 1; 310 of FIG. 3; 410 of FIG. 4), comprising:
a communication circuit (190 of FIG. 1; 202 of FIG. 2); and
at least one processor (120 of FIG. 1; 204 of FIG. 2) connected to the communication circuit (190 of FIG. 1; 202 of FIG. 2),
wherein the at least one processor (120 of FIG. 1; 204 of FIG. 2) is configured to:
identify whether the electronic device and an IoT (internet of things) device belong to the same network through a network search;
identify whether a session between the IoT device and a cloud is released; and
provide a function of reconnecting the session between the IoT device and the cloud in case that the electronic device and the IoT device belong to the same network, and the session between the IoT device and the cloud is released.

2. The electronic device of claim 1, wherein the at least one processor (120 of FIG. 1; 204 of FIG. 2) is configured to:
request essential information for the IoT device to a server in the cloud through the communication circuit (190 of FIG. 1; 202 of FIG. 2); and
receive a response message including the essential information for the IoT device from the server in the cloud through the communication circuit (190 of FIG. 1; 202 of FIG. 2), and wherein the essential information for the IoT device includes a setup ID, a model code, a serial number, an SSID, and a Mac address hash.

3. The electronic device of claim 1 or 2, wherein the at least one processor (120 of FIG. 1; 204 of FIG. 2) is configured to:
request Wi-Fi AP information for the IoT device from a server in the cloud through the communication circuit (190 of FIG. 1; 202 of FIG. 2); and
receive a response message including the Wi-Fi AP information for the IoT device from the server in the cloud through the communication circuit (190 of FIG. 1; 202 of FIG. 2).

4. The electronic device of any one of claims 1 to 3, wherein the at least one processor (120 of FIG. 1; 204 of FIG. 2) is configured to perform a discovery process for searching for the IoT device using a Mac address of the IoT device.

5. The electronic device of any one of claims 1 to 4, wherein the at least one processor (120 of FIG. 1; 204 of FIG. 2) is configured to establish a direct connection between the electronic device and the IoT device in case that the electronic device and the IoT device do not belong to the same network, and the session between the IoT device and the cloud is released.

6. The electronic device of any one of claims 1 to 5, wherein the at least one processor (120 of FIG. 1; 204 of FIG. 2) is configured to:
identify a plurality of offline IoT devices; and
recommend reconnection of the plurality of IoT devices in order of higher priority based on respective reconnection priorities of the plurality of IoT devices.

7. The electronic device of any one of claims 1 to 6, wherein the at least one processor (120 of FIG. 1; 204 of FIG. 2) is configured to receive an error code regarding a cause of the release of the session between the IoT device and the cloud from the IoT device through the communication circuit (190 of FIG. 1; 202 of FIG. 2).

8. The electronic device of any one of claims 1 to 7, wherein after the IoT device is onboard, Wi-Fi AP information for the IoT device is registered in the server in the cloud.

9. A method for operating an electronic device (101 of FIG. 1; 310 of FIG. 3; 410 of FIG. 4), the method comprising:
identifying whether the electronic device and an IoT (internet of things) device belong to the same network through a network search;
identifying whether a session between the IoT device and a cloud is released; and
providing a function of reconnecting the session between the IoT device and the cloud in case that the electronic device and the IoT device belong to the same network, and the session between the IoT device and the cloud is released.

10. The method of claim 9, further comprising:
requesting essential information for the IoT device from a server in the cloud; and
receiving a response message including the essential information for the IoT device from the server in the cloud, wherein the essential information for the IoT device includes a setup ID, a model code, a serial number, an SSID, and a Mac address hash.

11. The method of claim 9 or 10, further comprising:
requesting Wi-Fi AP information for the IoT device from a server in the cloud; and
receiving a response message including the Wi-Fi AP information for the IoT device from the server in the cloud.

12. The method of any one of claims 9 to 11, further comprising performing a discovery process for searching for the IoT device using a Mac address of the IoT device.

13. The method of any one of claims 9 to 12, further comprising establishing a direct connection between the electronic device and the IoT device in case that the electronic device and the IoT device do not belong to the same network, and the session between the IoT device and the cloud is released.

14. The method of any one of claims 9 to 13, further comprising:
identifying a plurality of offline IoT devices; and
recommending reconnection of the plurality of IoT devices in order of higher priority based on respective reconnection priorities of the plurality of IoT devices.

15. A computer-readable storage medium storing at least one instruction, wherein the at least one instruction, when executed by at least one processor, causes an electronic device to perform a plurality of operations, and wherein the plurality of operations comprise:
identifying whether the electronic device and an IoT (internet of things) device belong to the same network through a network search;
identifying whether a session between the IoT device and a cloud is released; and
providing a function of reconnecting the session between the IoT device and the cloud in case that the electronic device and the IoT device belong to the same network, and the session between the IoT device and the cloud is released.
